(19) Europäisches Patentamt
European Patent Office
Office européen des brevets

(11) **EP 2 618 185 A1**

(12) **EUROPEAN PATENT APPLICATION**
published in accordance with Art. 153(4) EPC

(43) Date of publication:
**24.07.2013 Bulletin 2013/30**

(51) Int Cl.:
*G02B 5/02* (2006.01)   *F21V 3/04* (2006.01)
*G02F 1/1335* (2006.01)

(21) Application number: **11825271.7**

(22) Date of filing: **16.09.2011**

(86) International application number:
**PCT/JP2011/071232**

(87) International publication number:
**WO 2012/036273 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010 JP 2010210130**

(71) Applicant: **Nitto Denko Corporation**
**Ibaraki-shi, Osaka 567-8680 (JP)**

(72) Inventors:
• **NISHIMURA, Akinori**
**Ibaraki-shi, Osaka 567-8680 (JP)**

• **TAKEMOTO, Hiroyuki**
**Ibaraki-shi, Osaka 567-8680 (JP)**
• **NAKAMURA, Kozo**
**Ibaraki-shi, Osaka 567-8680 (JP)**
• **SHIBATA, Shusaku**
**Ibaraki-shi, Osaka 567-8680 (JP)**
• **FUCHIDA, Takehito**
**Ibaraki-shi, Osaka 567-8680 (JP)**

(74) Representative: **HOFFMANN EITLE**
**Patent- und Rechtsanwälte**
**Arabellastrasse 4**
**81925 München (DE)**

(54) **METHODS FOR MANUFACTURING LIGHT-DIFFUSING ELEMENT AND POLARIZING PLATE WITH LIGHT-DIFFUSING ELEMENT, AND LIGHT-DIFFUSING ELEMENT AND POLARIZING PLATE WITH LIGHT-DIFFUSING ELEMENT OBTAINED BY SAME METHODS**

(57)   There is provided a method capable of producing an extremely thin light diffusing element, which has strong light diffusibility and in which backscattering is suppressed, at a low cost and with extremely high productivity. A method of producing a light diffusing element according to an embodiment of the present invention includes : mixing a matrix formation material containing a monomer of a resin component and an ultrafine particle component, light diffusing fine particles, and a solvent for dissolving the monomer; and polymerizing the monomer. A zeta potential of each of the light diffusing fine particles in a solution prepared by dissolving the monomer in the solvent is equal in sign to a zeta potential of the ultrafine particle component in the solution prepared by dissolving the monomer in the solvent.

FIG. 1A

**Description**

Technical Field

The present invention relates to methods of producing a light diffusing element andapolarizingplate with a light diffusing element, and a light diffusing element and a polarizing plate with a light diffusing element obtained by the methods.

A light diffusing element is widely used in illumination covers, screens for projection televisions, surface-emitting devices (for example, liquid crystal display devices), and the like. In recent years, the light diffusing element has been used for enhancing the display quality of liquid crystal display devices and the like and for improving viewing angle properties, for example. As the light diffusing element, for example, there is proposed a light diffusing element in which fine particles are dispersed in a matrix such as a resin sheet (see, for example, Patent Literature 1). In such light diffusing element, most of incident light scatters forward (output plane side), whereas a part thereof scatters backward (incident plane side). As a refractive index difference between each of the fine particles and the matrix becomes larger, diffusibility (for example, a haze value) increases. However, if the refractive index difference is large, backscattering increases. More specifically, there is proposed a technology for placing a light diffusing element on the top surface of a liquid crystal display device so as to enhance the display quality of the liquid crystal display device. However, such light diffusing element does not have sufficient light diffusibility (for example, a haze value of less than 90%), and dose not exert any sufficient effect of improving the display quality. On the other hand, in the case where a light diffusing element having large light diffusibility (for example, a haze value of 90% or more) is used in a liquid crystal display device so as to enhance the display quality, when outside light is incident upon the liquid crystal device, a screen becomes whitish, resulting in a problem in that it is difficult to display a video and an image with a high contrast in a bright place. This is because the fine particles in the light diffusing element cause the incident light to scatter backward as well as forward. According to the conventional light diffusing element, as a haze value becomes larger, backscattering increases. Therefore, it is very difficult to satisfy both the increase in light diffusibility and the suppression of backscattering. Further, in an illumination application, as a haze value becomes larger, backscattering increases and a total light transmittance decreases, which degrades light use efficiency.

As means for solving the above-mentioned problems, based on the concept of suppressing the reflection at an interface between each of the fine particles and the matrix, for example, there are proposed: core-shell fine particles, in which the refractive index of a core is different from that of a shell, and fine particles having gradient refractive indices, such as the so-called gradient index (GRIN) fine particles, in which the refractive index changes continuously from the center of each of the fine particles toward the outer side, are dispersed in a resin (see, for example, Patent Literatures 2 to 8). However, with any one of those technologies, a thin light diffusing element with a high haze cannot be obtained. Further, those technologies are not practical because of the following reason. Production processes for the fine particles to be used in the technologies are complicated as compared with those for ordinary fine particles and hence their productivity is insufficient.

Citation List

Patent Literature

    [PTL 1] JP 3071538 B2
    [PTL 2] JP 06-347617 A
    [PTL 3] JP 2003-262710 A
    [PTL 4] JP 2002-212245 A
    [PTL 5] JP 2002-214408 A
    [PTL 6] JP 2002-328207 A
    [PTL 7] JP 2010-077243 A
    [PTL 8] JP 2010-107616 A

Summary of Invention

Technical Problem

The present invention has been made to solve the above-mentioned conventional problems, and an object of the present invention is to provide a method by which an extremely thin light diffusing element which has strong light diffusibility and in which backscattering is suppressed can be produced at a low cost and with extremely high productivity.

Solution to Problem

A method of producing a light diffusing element according to an embodiment of the present invention includes the steps of: mixing a matrix formation material containing a monomer of a resin component and an ultrafine particle component, light diffusing fine particles, and a solvent for dissolving the monomer; and polymerizing the monomer. A zeta potential of each of the light diffusing fine particles in a solution prepared by dissolving the monomer in the solvent is equal in sign to a zeta potential of the ultrafine particle component in the solution prepared by dissolving the monomer in the solvent.

In one embodiment of the present invention, the method further includes the step of reducing a zeta potential of each of the light diffusing fine particles in a mixed liquid prepared in the mixing step to 60% or less of a zeta potential of each of the light diffusing fine particles in the mixed liquid immediately after the preparation in the mixing step.

In one embodiment of the present invention, the method further includes the step of reducing a zeta potential of each of the light diffusing fine particles in a mixed liquid prepared in the mixing step by 6 mV or more from a zeta potential of each of the light diffusing fine particles in the mixed liquid immediately after the preparation in the mixing step.

In one embodiment of the present invention, the step of reducing the zeta potential includes at least one selected from the group consisting of leaving the mixed liquid at rest at room temperature for 10 hours or more, subjecting the mixed liquid to a treatment selected from an ultrasonic treatment and a dispersion treatment with a stirring machine, and subjecting the mixed liquid to a heating treatment.

In one embodiment of the present invention, the method further includes the step of uniformizing a concentration of the light diffusing fine particles in the mixed liquid after the step of reducing the zeta potential.

In one embodiment of the present invention, the ultrafine particle component has an average primary particle diameter of 1 nm to 100 nm.

In one embodiment of the present invention, the method includes the steps of: preparing an application liquid containing the matrix formation material and the light diffusing fine particles; applying the application liquid onto a long base material while conveying the base material; and polymerizing the monomer of the resin component in the application liquid while conveying the base material to which the application liquid is applied.

In one embodiment of the present invention, the method further includes, after the mixing step and before the polymerizing step, the step of forming, in a vicinity of a surface of each of the light diffusing fine particles in the mixed liquid prepared in the mixing step, a concentration modulation region in which a presence ratio of the ultrafine particle component increases as a distance from the light diffusing fine particle lengthens.

According to another aspect of the present invention, a method of producing a polarizing plate with a light diffusing element is provided. The method includes attaching a light diffusing element obtained by the above-mentioned production method and a polarizing plate.

According to still another aspect of the present invention, a light diffusing element, which is obtained by the above-mentioned production method, is provided. The light diffusing element includes: a matrix; and light diffusing fine particles dispersed in the matrix, wherein a refractive index modulation region in which a refractive index changes substantially continuously is formed in a vicinity of an interface between the matrix and each of the light diffusing fine particles.

According to still another aspect of the present invention, a polarizing plate with a light diffusing element, which is obtained by the above-mentioned production method, is provided.

According to still another aspect of the present invention, a mixed liquid for forming a light diffusing element is provided. The mixed liquid includes: a matrix formation material containing a monomer of a resin component and an ultrafine particle component; light diffusing fine particles; and a solvent for dissolving the monomer, wherein the mixed liquid for forming a light diffusing element has, in a vicinity of a surface of each of the light diffusing fine particles, a concentration modulation region in which a presence ratio of the ultrafine particle component increases as a distance from the light diffusing fine particle lengthens.

According to still another aspect of the present invention, a method of producing the above-mentioned mixed liquid for forming a light diffusing element is provided. The method includes the steps of: mixing a matrix formation material containing a monomer of a resin component and an ultrafine particle component, light diffusing fine particles, and a solvent for dissolving the monomer; and forming, in an outer portion of a vicinity of a surface of each of the light diffusing fine particles in a mixed liquid prepared in the mixing step, a concentration modulation region in which a presence ratio of the ultrafine particle component increases as a distance from the light diffusing fine particle lengthens.

In one embodiment of the present invention, a zeta potential of each of the light diffusing fine particles in a solution prepared by dissolving the monomer in the solvent is equal in sign to a zeta potential of the ultrafine particle component in the solution prepared by dissolving the monomer in the solvent.

In one embodiment of the present invention, the step of forming the concentration modulation region includes reducing a zeta potential of each of the light diffusing fine particles in a mixed liquid prepared in the mixing step to 60% or less of a zeta potential of each of the light diffusing fine particles in the mixed liquid immediately after the preparation in the mixing step.

In one embodiment of the present invention, the step of forming the concentration modulation region includes reducing a zeta potential of each of the light diffusing fine particles in a mixed liquid prepared in the mixing step by 6 mV or more from a zeta potential of each of the light diffusing fine particles in the mixed liquid immediately after the preparation in the mixing step.

In one embodiment of the present invention, the step of forming the concentration modulation region includes at least one selected from the group consisting of leaving the mixed liquid at rest at room temperature for 10 hours or more, subjecting the mixed liquid to an ultrasonic treatment, and subjecting the mixed liquid to a heating treatment.

In one embodiment of the present invention, the method further includes the step of uniformizing a concentration of the light diffusing fine particles in the mixed liquid after the step of forming the concentration modulation region.

In one embodiment of the present invention, the ultrafine particle component has an average primary particle diameter of 1 nm to 100 nm.

Advantageous Effects of Invention

According to the present invention, in a method of producing a light diffusing element, a substantial gradient of the dispersion concentration of the ultrafine particle component can be formed in a matrix to be formed by setting the zeta potential of each of light diffusing fine particles in a solution prepared by dissolving the monomer of a resin component equal in sign to the zeta potential of the ultrafine particle component in the solution. Therefore, a refractive index modulation region can be formed in the vicinity of an interface between the matrix and each light diffusing fine particle. As a result, an extremely thin light diffusing element which has strong light diffusibility and in which backscattering is suppressed can be obtained. Moreover, according to the production method of the present invention, the refractive index modulation region can be formed in the light diffusing element to be obtained without using any complicated production process, or any special and expensive raw material or reagent by forming the substantial gradient of the dispersion concentration of the ultrafine particle component with electric repulsion between each ultrafine particle component and each light diffusing fine particle as a main factor. Therefore, an extremely thin light diffusing element which has strong light diffusibility and in which backscattering is suppressed can be obtained at a low cost and with extremely high productivity.

Brief Description of Drawings

FIG. **1A** is a schematic view illustrating a relationship between a reduction in zeta potential and a refractive index modulation region in a method of producing a light diffusing element according to a preferred embodiment of the present invention.

FIG. **1B** is a schematic view illustrating a method of producing a light diffusing element according to a preferred embodiment of the present invention.

FIG. **2** is a schematic view illustrating an example of a method of producing a polarizing plate with a light diffusing element of the present invention.

FIG. **3A** is a schematic cross-sectional view of a light diffusing element according to a preferred embodiment of the present invention.

FIG. **3B** is an enlarged schematic view illustrating the vicinity of a light diffusing fine particle of the light diffusing element of FIG. **3A.**

FIG. **4A** is a TEM image for illustrating the dispersed state of an ultrafine particle component in the vicinity of a light diffusing fine particle in the light diffusing element according to a preferred embodiment of the present invention.

FIG. **4B** is a three-dimensional image reconstructed from the TEM image of FIG. **4A** viewed from one direction.

FIG. **4C is** a three-dimensional image reconstructed from the TEM image of FIG. **4A** viewed from another direction.

FIG. **4D** is a binarized image of the three-dimensional reconstructed image of FIG. **4B**, the figure being used for illustrating a method of calculating the dispersion concentration (presence ratio) of the ultrafine particle component in the vicinity of an interface between a matrix and the light diffusing fine particle.

FIG. **5** is a graph illustrating a relationship between a distance from the surface of the light diffusing fine particle and the dispersion concentration (presence ratio) of the ultrafine particle component in the light diffusing element according to a preferred embodiment of the present invention.

FIG. **6** is a schematic view for illustrating a change in refractive index from the center portion of the light diffusing fine particle to the matrix in the light diffusing element of the present invention.

FIG. **7A** is a schematic view for illustrating a fine uneven-shaped boundary formed in the vicinity of the surface of the light diffusing fine particle, the boundary forming a refractive index modulation region.

FIG. **7B** is a schematic view for illustrating details about the fine uneven-shaped boundary of FIG. **7A.**

FIG. **8 (a)** is a conceptual diagram for illustrating a mechanism for the occurrence of backscattering in the case where the relationship of "average refractive index $n_M$ of matrix > refractive index $n_P$ of light diffusing fine particle" is satisfied, and FIG. **8(b)** is a conceptual diagram for illustrating a mechanism for the occurrence of backscattering in the case where $n_M < n_P$.

FIG. **9** is a schematic cross-sectional view of a polarizing plate with a light diffusing element according to a preferred embodiment of the present invention.

FIG. **10** is a schematic view for illustrating a method of calculating a light diffusion half-value angle.

FIG. **11** is a TEM image of the vicinity of a light diffusing fine particle of a light diffusing element of Example 1.

FIG. **12** is a TEM image of the vicinity of a light diffusing fine particle of a light diffusing element of Comparative Example 1.

Description of Embodiments

Hereinafter, preferred embodiments of the present invention are described with reference to the drawings. However, the present invention is not limited to these specific embodiments.

A. Method of producing light diffusing element

A method of producing a light diffusing element according to an embodiment of the present invention includes: the step of mixing a matrix formation material containing a monomer of a resin component and an ultrafine particle component, light diffusing fine particles, and a solvent for dissolving the monomer (referred to as "step A"); and the step of polymerizing the monomer (referred to as "step B").

A-1. Step A

In the step A, a mixed liquid is prepared by mixing the matrix formation material, the light diffusing fine particles, and the solvent. Therefore, the mixed liquid is typically a dispersion obtained by dispersing the ultrafine particle component and the light diffusing fine particles in the monomer of the resin component and the solvent (typically a volatile solvent). Any appropriate means (such as an ultrasonic treatment or a dispersion treatment with a stirring machine) can be adopted as means for dispersing the ultrafine particle component and the light diffusing fine particles. The mixed liquid is applied to a base material and then subjected to the polymerizing step (step B). Therefore, in the description, the mixed liquid is hereinafter sometimes referred to as "application liquid."

In the present invention, the zeta potential of each of the light diffusing fine particles in the solution prepared by dissolving the monomer of the resin component in the solvent (hereinafter referred to as "monomer solution") is equal in sign to the zeta potential of each of the ultrafine particle component in the monomer solution. When the zeta potential of the ultrafine particle component and the zeta potential of the light diffusing fine particle in the monomer solution are equal in sign to each other, the adhesion of the ultrafine particle component to the surface of the light diffusing fine particle is suppressed by electric repulsion between the ultrafine particle component and the light diffusing fine particle. As a result, a substantial gradient of the dispersion concentration of the ultrafine particle component is formed in a matrix to be formed, whereby a refractive index modulation region is formed in the vicinity of an interface between the matrix and each light diffusing fine particle (that is, the matrix having the refractive index modulation region in the vicinity of the light diffusing fine particle and a refractive index constant region on the outside thereof is formed). As a result, an extremely thin light diffusing element which has strong light diffusibility and in which backscattering is suppressed can be obtained. As described above, the refractive index modulation region can be formed in the light diffusing element to be obtained without using any complicated production process, or any special and expensive raw material or reagent by forming the substantial gradient of the dispersion concentration of the ultrafine particle component with the electric repulsion between the ultrafine particle component and each light diffusing fine particle as a main factor. Therefore, an extremely thin light diffusing element which has strong light diffusibility and in which backscattering is suppressed can be obtained at a low cost and with extremely high productivity. It should be noted that details about the light diffusing element (especially the refractive index modulation region) obtained by the production method of the present invention are described in the section C to be described later.

The zeta potential of the ultrafine particle component and the zeta potential of each of the light diffusing fine particles in the monomer solution have only to be equal in sign to each other. Therefore, both the zeta potentials may be positive, or both the zeta potentials may be negative. Both the zeta potential of the ultrafine particle component and the zeta potential of the light diffusing fine particle in the monomer solution are preferably positive. This is because the degree of freedom of combination is large as the zeta potential of the ultrafine particle component in the monomer solution is positive in many cases. The zeta potential of the ultrafine particle component in the monomer solution is preferably 25 mV to 40 mV, more preferably 30 mV to 35 mV. The zeta potential of the light diffusing fine particle in the monomer solution is preferably 0.1 mV to 5 mV, more preferably 0.5 mV to 3 mV.

The zeta potential can be determined by measuring the electrophoretic mobility of a particle and applying Henry's equation to the mobility. Specifically, a zeta potential z can be determined from the following expression (1).

$$z = (U_E \times 3\eta) / (f(ka) \times 2\varepsilon) \quad \cdots \quad (1)$$

In the expression (1), $U_E$ represents the electrophoretic mobility, $\eta$ represents the viscosity of a medium, $\varepsilon$ represents the dielectric constant of the medium, and f(ka) represents a Henry function.

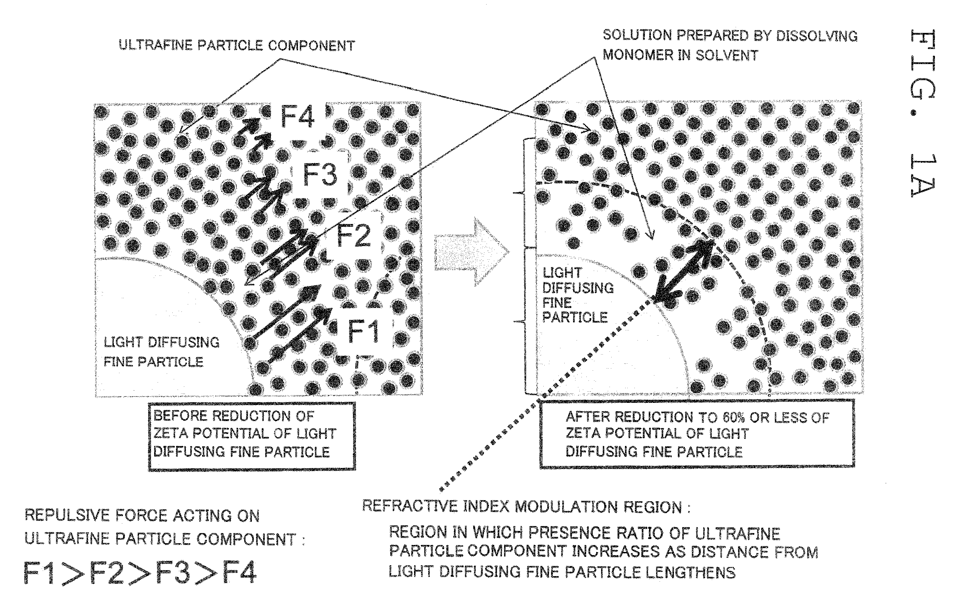

In one embodiment, the zeta potential of each of the light diffusing fine particles in the mixed liquid (application liquid) is preferably reduced to 60% or less of the zeta potential of each of the light diffusing fine particles in the monomer solution. In another embodiment, the zeta potential of each of the light diffusing fine particles in the mixed liquid (application liquid) is reduced from the zeta potential of each of the light diffusing fine particles in the monomer solution by preferably 6 mV or more, more preferably 6. 5mV or more. In such state where the zeta potential has reduced, a concentration modulation region in which the presence ratio of the ultrafine particle component increases as a distance from a light diffusing fine particle in the mixed liquid lengthens is formed in the outer portion of the vicinity of the surface of the light diffusing fine particle. More specifically, as described above, when the zeta potential of the ultrafine particle component and the zeta potential of each of the light diffusing fine particles in the monomer solution are equal in sign to each other, electric repulsion occurs between the ultrafine particle component and the light diffusing fine particle. Further, as illustrated in FIG. **1A,** a repulsive force acting on the ultrafine particle component attributable to the repulsion enlarges as the ultrafine particle component approaches the light diffusing fine particle. In addition, the use of a resin component (substantially its monomer) having high compatibility with the light diffusing fine particle facilitates the approach of the monomer of the resin component to the light diffusing fine particle. Such reduction of the zeta potential (formation of such concentration modulation region as illustrated in FIG. **1A**) is assumed to be realized as a synergistic result of the foregoing facts. The concentration modulation region corresponds to the refractive index modulation region at the interface between the matrix and the light diffusing fine particle in the light diffusing element to be obtained or in the vicinity thereof. According to an embodiment of the present invention, the refractive index modulation region can be favorably formed by utilizing the electric repulsion, and the compatibility between the light diffusing fine particle and the resin component (substantially its monomer).

A-1-1. Resin component

The resin component is formed of any suitable material as long as the effects of the present invention can be provided. Preferably, the resin component is formed of a compound that is of the same type as that of each of the light diffusing fine particles and that is of a different type from that of the ultrafine particle component. With this, the refractive index modulation region can be formed satisfactorily in the vicinity of the interface between the matrix to be formed and each of the light diffusing fine particles (in the vicinity of the surface of each of the light diffusing fine particles). More preferably, the resin component is formed of a compound having high compatibility with each of the light diffusing fine particles, among those of the same type. With this, the refractive index modulation region having a desired gradient of the refractive index can be formed. For example, the refractive index modulation region can be favorably formed by forming the resin component and the light diffusing fine particles of, for example, organic compounds, and forming the ultrafine particle component of, for example, an inorganic compound. Further, for example, the resin component and the light diffusing fine particles are preferably formed of materials that are highly compatible with each other out of the materials of the same type. This is because such desired reduction of the zeta potential as described above can be realized. The thickness and refractive index gradient of the refractive index modulation region can be controlled by: adjusting the zeta potential of each of the light diffusing fine particles and the zeta potential of the ultrafine particle component in the monomer solution; and adjusting the chemical and thermodynamic characteristics of the resin component, the ultrafine particle component, and the light diffusing fine particles. It should be noted that the term "same type" as usedhereinmeans that the chemical structures and properties are identical or similar to each other, and the term "different type" refers to one other than the same type. Whether materials are of the same type or not may vary depending upon ways to select standards. For example, in the case where materials are selected based on an organic or inorganic material, organic compounds are compounds of the same type, and an organic compound and an inorganic compound are compounds of different types. In the case where materials are selected based on a repetition unit of a polymer, for example, an acrylic polymer and an epoxy-based polymer are compounds of different types, although they are organic compounds. In the case where materials are selected based on the periodic table, an alkali metal and a transition metal are elements of different types, although they are inorganic elements.

The resin component is formed of preferably an organic compound, more preferably an ionizing radiation-curable resin. The ionizing radiation-curable resin is excellent in hardness of an applied film, and hence easily compensates for mechanical strength, which is a weak point of the ultrafine particle component described later. Examples of the ionizing radiation include UV light, visible light, infrared light, and an electron beam. Of those, UV light is preferred, and thus, the resin component is particularly preferably formed of a UV-curable resin. Examples of the UV-curable resin include resins formed of radical-polymerizable monomers and/or oligomers such as an acrylate resin (epoxy acrylate, polyester acrylate, acrylic acrylate, or ether acrylate). A monomer that constructs the acrylate resin preferably has a molecular weight of 200 to 700. Specific examples of the monomer component (precursor) that constructs the acrylate resin include pentaerythritol triacrylate (PETA, molecular weight: 298), neopentylglycol diacrylate (NPGDA, molecular weight: 212), dipentaerythritol hexaacrylate (DPHA, molecular weight: 632), dipentaerythritol pentaacrylate (DPPA, molecular weight: 578), and trimethylolpropane triacrylate (TMPTA, molecular weight: 296). If required, an initiator may be added to the monomer. Examples of the initiator include a UV radial generator (e.g., Irgacure 907, 127, or 192 manufactured by BASF Japan Ltd.) and benzoyl peroxide. The resin component may contain another resin component other than the ionizing radiation-curable resin. The another resin component may be an ionizing radiation-curable resin, a thermosetting resin, or a thermoplastic resin. Typical examples of the another resin component include an aliphatic (for example, polyolefin) resin and a urethane-based resin. In the case of using the another resin component, the kind and blending amount thereof are adjusted so that the refractive index modulation region is formed satisfactorily.

The resin component typically satisfies the following expression (2):

$$|n_P - n_A| < |n_P - n_B| \quad \cdots \quad (2)$$

in the formula (2), $n_A$ represents a refractive index of a resin component of a matrix, $n_B$ represents a refractive index of an ultrafine particle component of the matrix, and $n_P$ represents a refractive index of a light diffusing fine particle. Further, the resin component may also satisfy the following expression (3).

$$|n_P - n_A| < |n_A - n_B| \quad \cdots \quad (3)$$

The refractive index of the resin component is preferably 1.40 to 1.60.

The blending amount of the resin component in the application liquid is preferably 10 parts by weight to 80 parts by weight, more preferably 20 parts by weight to 65 parts by weight, with respect to 100 parts by weight of the matrix to be formed.

A-2-2. Ultrafine particle component

The ultrafine particle component **12** is formed of preferably a compound of a different type from those of the resin component described above and the light diffusing fine particles described later, more preferably an inorganic compound. Preferred examples of the inorganic compound include a metal oxide and a metal fluoride. Specific examples of the metal oxide include zirconium oxide (zirconia) (refractive index: 2.19), aluminum oxide (refractive index: 1.56 to 2.62), titanium oxide (refractive index: 2.49 to 2.74), and silicon oxide (refractive index: 1.25 to 1.46). Specific example of the metal fluoride include magnesium fluoride (refractive index: 1.37) and calcium fluoride (refractive index: 1.40 to 1.43). These metal oxides and metal fluorides absorb less light and each have a refractive index which is difficult to be expressed with organic compounds such as the ionizing radiation-curable resin and the thermoplastic resin. Therefore, the weight concentration of the ultrafine particle component becomes relatively higher with increasing distance from the interface with each of the light diffusing fine particles, and thus, the metal oxides and metal fluorides can change the refractive index largely. By setting a refractive index difference between each of the light diffusing fine particles and the matrix to be large, strong light diffusibility can be realized even with a thin film, and the effect of preventing backscattering is large because the refractive index modulation region is formed. Zirconium oxide is a particularly preferred inorganic compound.

The ultrafine particle component may also satisfy the expressions (2) and (3). The refractive index of the ultrafine particle component is preferably 1.40 or less or 1.60 or more, more preferably 1.40 or less or 1.70 to 2.80, particularly preferably 1.40 or less or 2.00 to 2.80. When the refractive index is more than 2.40 or less than 1.60, the refractive index difference between each of the light diffusing fine particles and the matrix becomes insufficient, and in the case where the light diffusing element is used in a liquid crystal display device adopting a collimated backlight front diffusing system, light from a collimated backlight cannot be diffused enough, which may narrow a viewing angle.

It is preferred that an average primary particle diameter of the ultrafine particle component be small relative to the average thickness L of the refractive index modulation region to be formed. More specifically, the average primary particle diameter is preferably 1/50 to 1/2, more preferably 1/25 to 1/3 with respect to the average thickness L. When the average primary particle diameter is more than 1/2 with respect to the average thickness L, the refractive index in the refractive index modulation region does not change substantially continuously in some cases. When the average primary particle diameter is less than 1/50, it may be difficult to form the refractive index modulation region in some cases. The average primary particle diameter is preferably 1 nm to 100 nm, more preferably 1 nm to 50 nm. The ultrafine particle component may form a secondary aggregate, and the average particle diameter (average particle diameter of the aggregate) in that case is preferably 10 nm to 100 nm, more preferably 10 nm to 80 nm. As described above, by using the ultrafine particle component with an average particle diameter smaller than the wavelength of light, geometric reflection, refraction, and scattering are not caused between the ultrafine particle component and the resin component, and a matrix that is optically uniform can be obtained. As a result, a light diffusing element that is optically uniform can be obtained.

It is preferred that the ultrafine particle component have satisfactory dispersibility with the resin component. The term "satisfactory dispersibility" as used herein means that an applied film, which is obtained by applying an application liquid obtained by mixing the resin component, the ultrafine particle component (if required, a small amount of a UV initiator), and a volatile solvent, followed by removing the solvent by drying, is transparent.

Preferably, the ultrafine particle component is subjected to surface modification. By conducting surface modification, the ultrafine particle component can be dispersed satisfactorily in the resin component, and the refractive index modulation region can be formed satisfactorily. As surface modification means, any suitable means can be adopted as long as the effect of the present invention is obtained. Typically, the surface modification is conducted by applying a surface modifier onto the surface of an ultrafine particle component to form a surface modifierlayer. Preferred specific examples of the surface modifier include coupling agents such as a silane-based coupling agent and a titanate-based coupling agent, and a surfactant such as a fatty acid-based surfactant. By using such surface modifier, the wettability between the resin component and the ultrafine particle component is enhanced, the interface between the resin component and the ultrafine particle component is stabilized, the ultrafine particle component is dispersed satisfactorily in the resin component, and the refractive index modulation region can be formed satisfactorily.

The blending amount of the ultrafine particle component in the application liquid is preferably 15 parts by weight to 80 parts by weight, more preferably 20 parts by weight to 70 parts by weight with respect to 100 parts by weight of the matrix to be formed. The blending amount corresponds to the dispersion concentration of the ultrafine particle component in the matrix to be formed. Such blending amount can realize the substantial gradient (described later) of the dispersion concentration of the ultrafineparticle component in the matrix to be formed. The gradient can be controlled by adjusting the blending amount.

A-1-3. Light diffusing fine particles

The light diffusing fine particles **20** are also formed of any suitable material, as long as the effects of the present invention can be obtained. Preferably, as described above, the light diffusing fine particles **20** are formed of a compound of the same type as that of the resin component of the matrix. For example, in the case where the ionizing radiation-curable resin that constructs the resin component of the matrix is an acrylate-based resin, it is preferred that the light diffusing fine particles be also constructed of the acrylate-based resin. More specifically, when the monomer component of the acrylate-based resin that constructs the resin component of the matrix is, for example, PETA, NPGDA, DPHA, DPPA, and/or TMPTA as described above, the acrylate-based resin that constructs the light-diffusing fine particles is preferably polymethyl methacrylate (PMMA), polymethyl acrylate (PMA), or a copolymer thereof, or a cross-linked product thereof. A copolymerizable component for each of PMMA and PMA is, for example, polyurethane, polystyrene (PS), or a melamine resin. Particularly preferably, the light diffusing fine particles are constructed of PMMA. This is because the relationship in refractive index and thermodynatic properties with respect to the resin component of the matrix and the ultrafine particle component is suitable.

The average particle diameter of each of the light diffusing fine particles is preferably 1.0 $\mu$m to 5.0 $\mu$m, more preferably 1.0 $\mu$m to 4.0 $\mu$m. The average particle diameter of each of the light diffusing fine particles is preferably 1/2 or less (for example, 1/2 to 1/20) of the thickness of the light diffusing element to be obtained. As long as the light diffusing fine particles each have an average particle diameter having such ratio with respect to the thickness of the light diffusing element to be obtained, a plurality of light diffusing fine particles can be arranged in a thickness direction of the light diffusing element. Therefore, while incident light is passing through the light diffusing element, the incident light can be diffused in a multiple manner, and consequently, sufficient light diffusibility can be obtained.

The standard deviation of a weight average particle diameter distribution of the light diffusing fine particles is preferably 1.0 $\mu$m or less, more preferably 0.5 $\mu$m or less. When the light diffusing fine particles each having a small particle diameter with respect to the weight average particle diameter are present in a large number, the light diffusibility may increase too much to suppress backscattering satisfactorily. When the light diffusing fine particles each having a large particle diameter with respect to the weight average particle diameter are present in a large number, a plurality of the light diffusing fine particles cannot be arranged in a thickness direction of the light diffusing element to be obtained, and multiple diffusion may not be obtained. As a result, the light diffusibility may become insufficient.

As the shape of each of the light diffusing fine particles, any suitable shape can be adopted depending upon the purpose. Specific examples thereof include a spherical shape, a scalelike shape, a plate shape, an oval shape, and an amorphous shape. In most cases, spherical fine particles can be used as the light diffusing fine particles.

The light diffusing fine particles may also satisfy the expressions (2) and (3). The refractive index of the light diffusing fine particles is preferably 1.30 to 1.70, more preferably 1.40 to 1.60.

The blending amount of the light diffusing fine particles in the application liquid is preferably 10 parts by weight to 100 parts by weight, more preferably 10 parts by weight to 40 parts by weight, still more preferably 10 parts by weight to 35 parts by weight with respect to 100 parts by weight of the matrix to be formed. For example, by allowing the light diffusing fine particles having an average particle diameter in the above-mentioned preferred range to be contained in such blending amount, a light diffusing element which is made of a thin film and has very excellent light diffusibility can be obtained.

A-1-4. Entire construction of application liquid

Any suitable solvent can be adopted as the solvent as long as the solvent can dissolve the monomer and uniformly disperse each of the ultrafine particle component and the light diffusing fine particles. Specific examples of the solvent include ethyl acetate, butyl acetate, isopropyl acetate, 2-butanone (methyl ethyl ketone), methyl isobutyl ketone, cyclopentanone, toluene, isopropyl alcohol, n-butanol, cyclopentane, and water.

The application liquid can further contain any suitable additive depending upon the purpose. For example, in order to disperse the ultrafine particle component satisfactorily, a dispersant can be preferably used. Other specific examples of the additive include a UV absorbing agent, a leveling agent, and an antifoaming agent.

The solid content of the application liquid can be adjusted so as to be preferably about 10% by weight to 70% by weight. With such solid content, an application liquid having a viscosity that facilitates application can be obtained.

In the present invention, when the application liquid is prepared by optimizing, for example, the zeta potential of the ultrafine particle component and the zeta potential of each of the light diffusing fine particles in the monomer solution, the blending amount of the ultrafine particle component, the degree of cross-linking of the light diffusing fine particles, and the kinds (such as refractive indices and compatibilities) of the resin component, the ultrafine particle component, and the light diffusing fine particles, the refractive index modulation region can be formed in the vicinity of an interface between the matrix and each light diffusing fine particle in the light diffusing element to be obtained merely by applying the application liquid to the base material and polymerizing the monomer on the base material. As a result, an extremely thin light diffusing element which has strong light diffusibility and in which backscattering is suppressed can be obtained without using any complicated production process, or any special and expensive raw material or reagent. For example, when such ultrafine particle component of zirconia and light diffusing fine particles of a PMMA that the zeta potential of the ultrafine particle component and the zeta potential of each of the light diffusing fine particles in the monomer solution are equal in sign to each other are used, and the dispersion concentration of the ultrafine particle component is set to 30 parts by weight to 70 parts by weight with respect to 100 parts by weight of the matrix, the following dispersion concentration gradient can be realized. The dispersion concentration of the ultrafine particle component in the matrix is small on a side close to each light diffusing fine particle and is large on a side close to the refractive index constant region of the matrix, and changes while forming a substantial gradient from the side of the light diffusing fine particle to the side of the refractive index constant region. Further, a refractive index modulation region whose thickness varies depending on positions on the surface of each light diffusing fine particle (like, for example, a contour shape of a candy called confetti) can be formed.

Any suitable film can adopted as the base material as long as the effects of the present invention can be provided. Specific examples thereof include a triacetyl cellulose (TAC) film, a polyethylene terephthalate (PET) film, a polypropylene (PP) film, a nylon film, an acrylic film, and a lactone-modified acrylic film. The base material may be subjected to surface modification such as adhesion enhancement treatment, or may include an additive such as a lubricant, an antistat, or a UV absorbing agent, as required. The base material may function as a protective layer in a polarizing plate with a light diffusing element described later. In one embodiment, the base material is long. The embodiment is described separately in the section A-4 to be described later.

Any suitable method using a coater can be adopted as a method of applying the application liquid onto the base material. Specific examples of the coater include a bar coater, a reverse coater, a kiss coater, a gravure coater, a die coater, and a comma coater. According to the present invention, a light diffusing element can be formed on the base material merely by applying and polymerizing (and, as required, drying) the application liquid. That is, the light diffusing element can be directly formed on the base material without using any adhesive or pressure-sensitive adhesive.

A-2. Step B

In the step B, any appropriate method can be adopted as a method of polymerizing the monomer depending on the kind of the monomer. For example, when the resin component is an ionizing radiation-curable resin, the monomer is polymerized by irradiating the monomer with ionizing radiation. When UV light is used as the ionizing radiation, its cumulative light quantity is preferably 50 mJ/cm$^2$ to 1,000 mJ/cm$^2$. The transmittance of the ionizing radiation for each of the light diffusing fine particles is preferably 70% or more, more preferably 80% or more. In addition, for example, when the resin component is a thermosetting resin, the monomer is polymerized by heating the monomer. A heating temperature and a heating time can be appropriately set depending on the kind of the resin component. The polymerization is preferably performed by irradiating the monomer with the ionizing radiation. The irradiation with the ionizing radiation can cure the applied film while favorably retaining the refractive index modulation region, and hence a light diffusing element having good diffusion characteristics can be produced. The polymerization of the monomer results in the formation of a matrix in which the light diffusing fine particles are dispersed. Simultaneously, in the matrix, a refractive index modulation region in which a refractive index changes substantially continuously is formed in the vicinity of an interface with each light diffusing fine particle, and a refractive index constant region is formed in a portion except the refractive index modulation region.

A-3. Step C

The production method preferably further includes the step of drying the application liquid after the application of the application liquid (Step C). Any appropriate method can be adopted as a drying method. Specific examples thereof include air-drying, drying by heating, and drying under reduced pressure. Of those, the drying by heating is preferred. A heating temperature is, for example, 60°C to 150°C and a heating time is, for example, 30 seconds to 5 minutes.
The drying step (Step C) may be conducted before the polymerization step (Step B) or after Step B.
It should be appreciated that the production method for a light diffusing element of the present invention can include, in addition to Steps A to C, any suitable steps, treatments and/or operations at any suitable times. The kind of such steps and the like and the time when such steps and the like are conducted can be set appropriately depending upon the purpose.

A-4. Roll conveyance

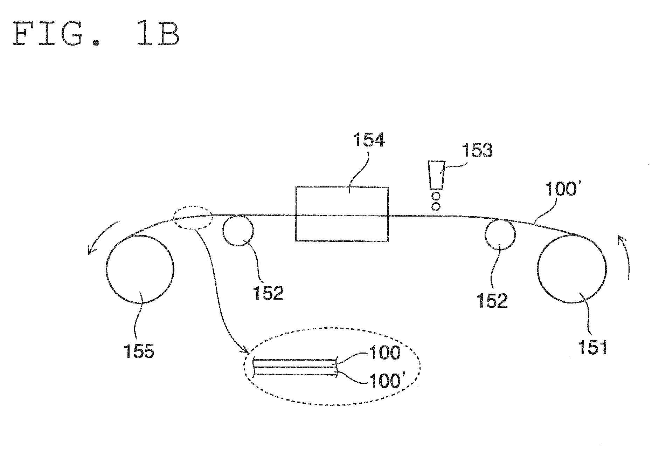

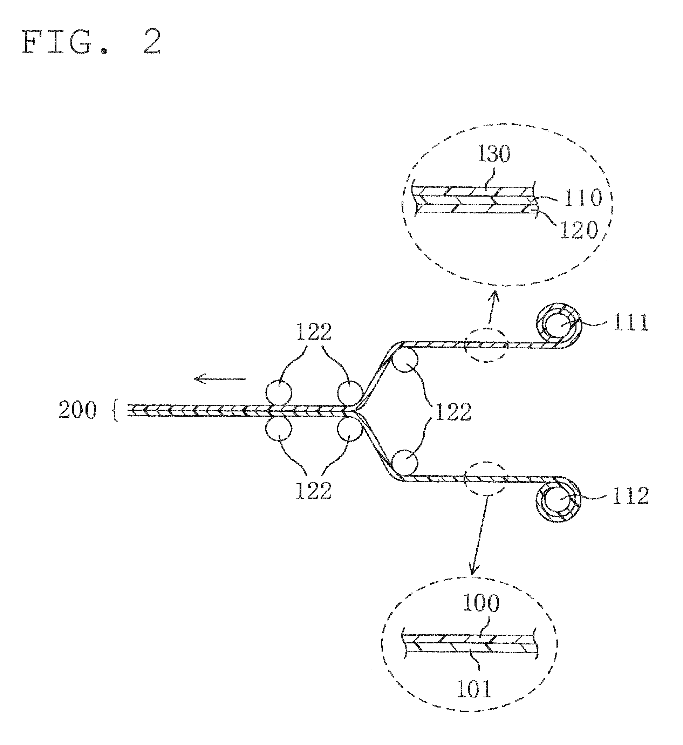

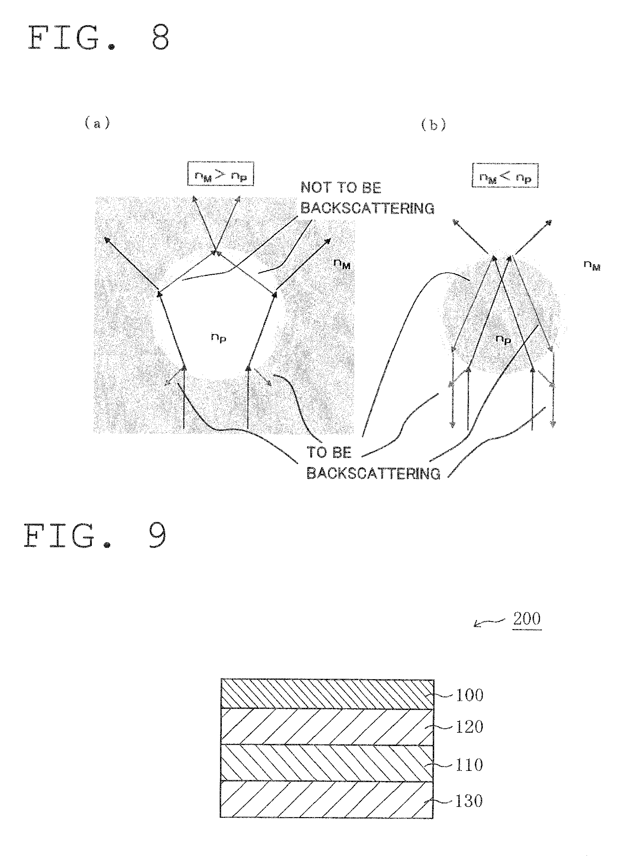

In one embodiment, the base material is long. In this case, production efficiency can be markedly improved because a light diffusing element can be produced while the base material is conveyed by rolls. FIG. **1B** is a schematic view for illustrating a method of producing a light diffusing element according to this embodiment. First, a base material **100'** stored in a roll shape is fed from a feeding roll **151** and then conveyed by conveyance rolls **152.** The application liquid is applied to the surface of the base material **100'**, which is being conveyed, by a coater **153.** Subsequently, a laminate of the base material and the applied liquid is conveyed to a polymerization-drying zone **154,** and then the polymerization of the monomer and drying are performed while the laminate passes the polymerization-drying zone. Thus, a laminate of the base material **100'** and a light diffusing element **100** is obtained. The laminate of the base material and the light diffusing element may be stored in a roll shape by being wound around a winding roll **155** as illustrated in FIG. **1B**, or may be continuously subjected to the step of producing a polarizing plate with a light diffusing element. The step of producing a polarizing plate with a light diffusing element is described in the following section B.
The light diffusing element is formed on the base material as described above. The resultant light diffusing element may be used as a single member by being peeled from the base material, may be used as a light diffusing element with a base material, may be used as a composite member (such as a polarizing plate with a light diffusing element) by being transferred from the base material onto a polarizing plate or the like, or may be used as a composite member (such as a polarizing plate with a light diffusing element) by being attached to a polarizing plate or the like together with the base material. When the light diffusing element is used as a composite member (such as a polarizing plate with a light diffusing element) by being attached to a polarizing plate or the like together with the base material, the base material can function as a protective layer for the polarizing plate.
B. Method of producing polarizing plate with light diffusing element
A method of producing a polarizing plate with a light diffusing element of the present invention may be performed continuously from such step of producing a light diffusing element as illustrated in FIG. **1B** in the foregoing, or may be performed at a desired time point after the resultant laminate of the light diffusing element and the base material has been temporarily stored. Referring to FIG. **2,** an example of a production method for a polarizing plate with a light diffusing element of the present invention is described briefly. In FIG. **2,** reference symbols **111** and **112** respectively denote rolls for winding a polarizing plate and a laminate of a light diffusing element/a base material, and **122** conveyance rolls. In the illustrated example, a polarizing plate (protective layer **130**/polarizer **110**/protective layer **120**) and a laminate of a light diffusing element **100**/a base material **100'** are fed out in an arrow direction and attached to each other while their respective longitudinal directions are aligned. At this time, the polarizing plate and the laminate are attached to each other so that the light diffusing element **100** and the protective layer **120** of the polarizing plate are adjacent to each other. After that, the base material **100'** is peeled off if necessary, and thereby, a polarizing plate with a light diffusing element **200** as illustrated in FIG. **9** to be described later can be obtained. Although not shown, for example, the polarizing plate (protective layer **130**/polarizer **110**) and the laminate of the light diffusing element **100**/base material **100'** can be attached to each other so that the base material **100'** and the polarizer **110** are adjacent to each other to produce a polarizing plate with a light diffusing element in which the base material functions as a protective layer. Thus, according to the present invention, so-called roll-to-roll can be adopted, and hence, a polarizing plate with a light diffusing element can be produced at very high production efficiency. Further, as described above, the roll-to-roll process can be performed continuously from the production process of the light diffusing element described in the section A-4, and hence, the production efficiency of the polarizing plate with a light diffusing element can be further enhanced by adopting such procedure. It should be noted that the term "roll-to-roll process" refers to a method involving continuously attaching long films with their longitudinal directions aligned while conveying the films with a roll.

C. Light diffusing element

A light diffusing element according to an embodiment of the present invention can be obtained by the method described in each of the section A-1 to the section A-4. The light diffusing element of the present embodiment has a matrix and light diffusing fine particles dispersed in the matrix. The light diffusing element of the present embodiment expresses a light-diffusing function on the basis of a difference in refractive index between the matrix and each of the light diffusing fine particles. In the light diffusing element of the present embodiment obtained by such method as described in each of the section A-1 to the section A-4, a refractive index modulation region in which a refractive index changes substantially continuously is formed in the vicinity of an interface between the matrix and each light diffusing fine particle. Therefore, the matrix has the refractive index modulation region in the vicinity of the interface with the light diffusing fine particle and a refractive index constant region on the outside of the refractive index modulation region (side distant from the light diffusing fine particle). It is preferred that the portion except the refractive index modulation region in the matrix be substantially the refractive index constant region. The phrase "in the vicinity of an interface between the matrix and each light diffusing fine particle" as used herein comprehends the surface of the light diffusing fine particle, the outer portion of the vicinity of the surface, and the inner portion of the vicinity of the surface. In the refractive index modulation region, the refractive index changes substantially continuously. The phrase "refractive index changes substantially continuously" as used herein means that the refractive index only needs to change substantially continuously at least from the surface of each of the light diffusing fine particles to the refractive index constant region in the refractive index modulation region.

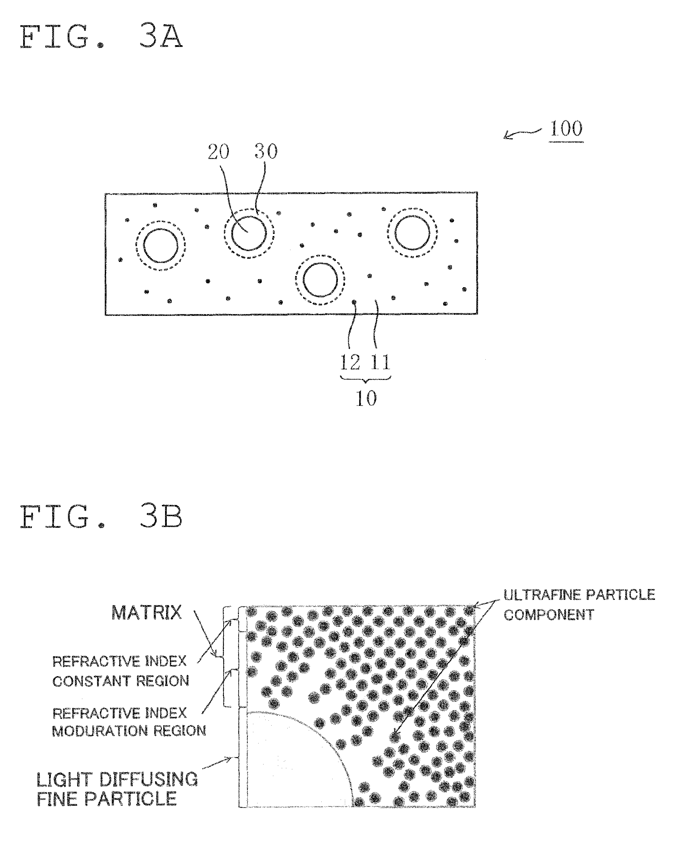

FIG. **3A** is a schematic view for illustrating the dispersed state of light diffusing fine particles in a matrix in a light diffusing element according to a preferred embodiment of the present invention. The light diffusing element **100** of FIG. **3A** has a matrix **10** containing a resin component **11** and an ultrafine particle component **12,** and light diffusing fine particles **20** dispersed in the matrix **10**. A refractive index modulation region **30** is preferably formed by a substantial gradient of the dispersion concentration of the ultrafine particle component **12** in the matrix **10.** Specifically, as illustrated in FIG. **3B**, in the refractive index modulation region **30,** the dispersion concentration of the ultrafine particle component **12** (typically specified by a weight concentration) increases as a distance from the light diffusing fine particle **20** lengthens (the weight concentration of the resin component **11** inevitably reduces). In other words, the ultrafine particle component **12** is dispersed at a relatively low concentration in the region closest to the light diffusing fine particle **20** in the refractive index modulation region **30,** and the concentration of the ultrafine particle component **12** increases as the distance from the light diffusing fine particle **20** lengthens.

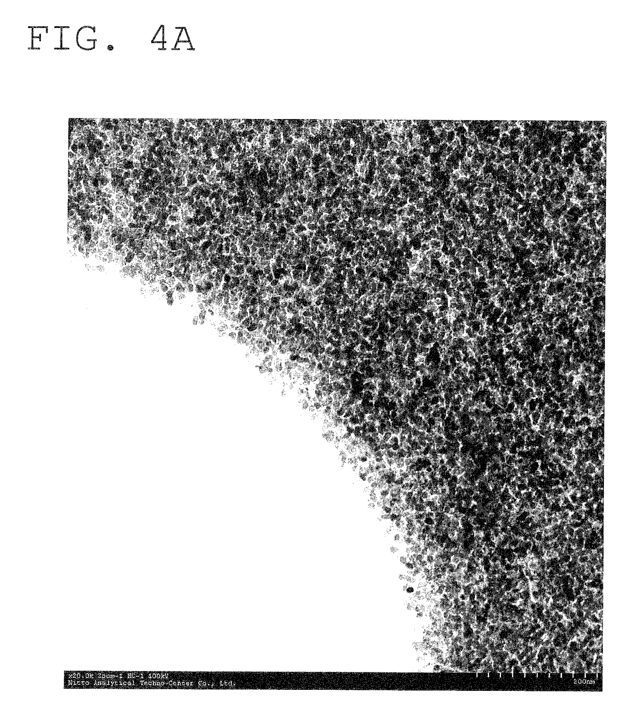

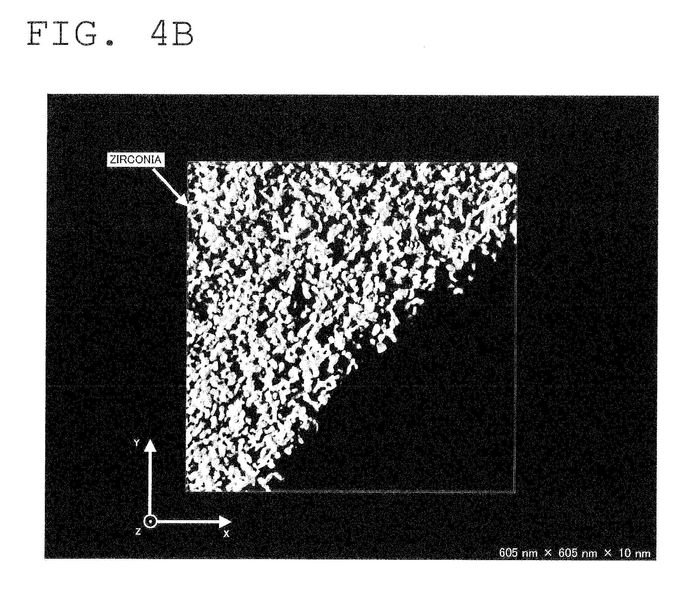

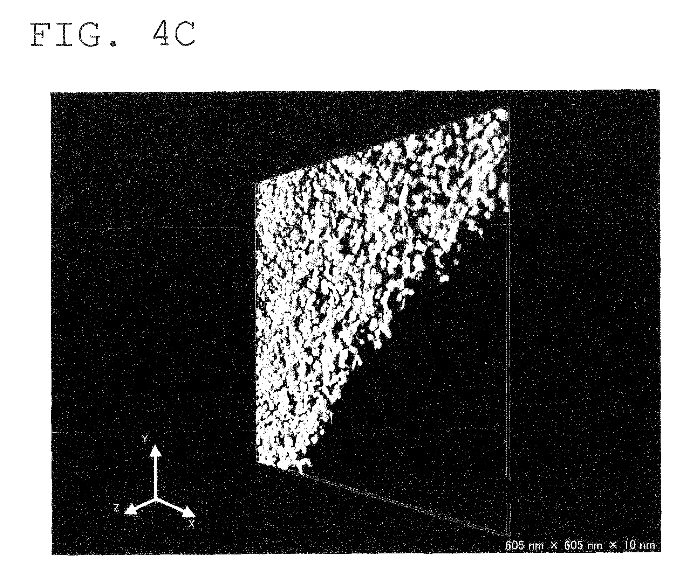

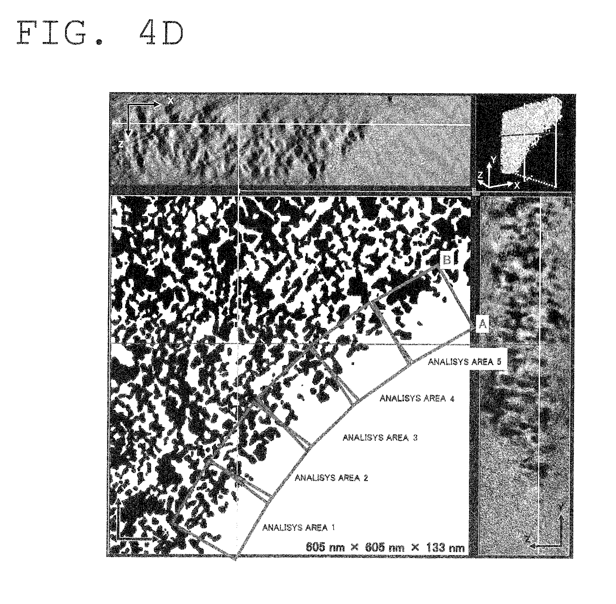

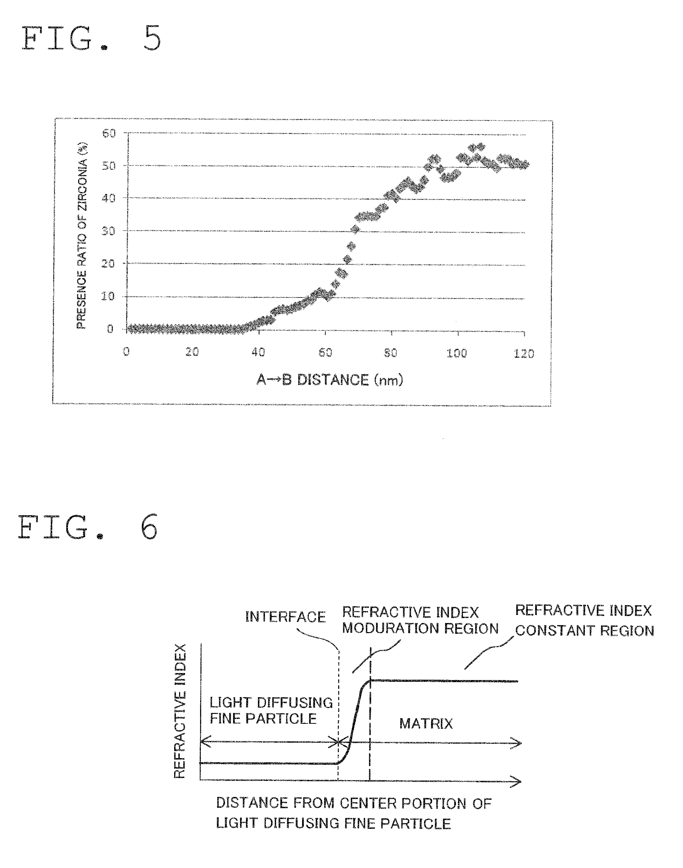

Such gradient of the dispersion concentration as described above is described with reference to a transmission electron microscope (TEM) image. FIG. **4A** is a two-dimensional TEM image showing the dispersed state of the ultrafine particle component in the vicinity of the light diffusing fine particle, FIG. **4B** and FIG. **4C** are three-dimensional images reconstructed from the TEM image of FIG. **4A** viewed from different directions respectively, and FIG. **4D** is a binarized image of the three-dimensional reconstructed image of FIG. **4B**. FIG. **5** is a graph illustrating a relationship between a distance from the surface of the light diffusing fine particle and the dispersion concentration (presence ratio) of the ultrafine particle component calculated from the TEM images of FIG. **4A** to FIG. **4C.** The graph of FIG. **5** is obtained by: dividing a portion in the vicinity of the interface between the matrix and the light diffusing fine particle of FIG. **4D** into five analysis areas; subjecting each of the five analysis areas to image processing; calculating a relationship between the distance from the surface of the light diffusing fine particle and the dispersion concentration (presence ratio) of the ultrafine particle component in each analysis area; averaging the calculated results; and graphing the average. As shown in FIG. **4A** to FIG. **4C,** in the refractive index modulation region, the dispersion concentration of the ultrafine particle component **12** (typically specified by a weight concentration) becomes relatively low as a distance from the refractive index constant region of the matrix **10** lengthens, and the extents to which the respective ultrafine particles approach the light diffusing fine particle differ from each other. It is preferred that as illustrated in FIG. **5,** the gradient of the concentration change of the dispersion concentration of the ultrafine particle component be small on a side close to the light diffusing fine particle **20** and be large on a side close to the refractive index constant region, and the concentration change while forming a substantial gradient from the side of the light diffusing fine particle to the side of the refractive index constant region. In other words, the gradient of the concentration change of the dispersion concentration of the ultrafine particle component **12** enlarges as the distance from the light diffusing fine particle lengthens. According to such production method of the present invention as described above, the refractive index modulation region **30** can be formed in the vicinity of the interface between the matrix **10** and the light diffusing fine particle **20** by utilizing the substantial gradient of the dispersion concentration of the ultrafine particle component **12** formed as a result of, for example, electric repulsion between the light diffusing fine particle and the ultrafine particle component. Accordingly, a light diffusing element can be produced by a markedly simple procedure and at a markedly low cost as compared with those in the case where GRIN fine particles are produced by a complicated production method and the GRIN fine particles are dispersed. Further, the refractive index can be smoothly changed at a boundary between the refractive index modulation region **30** and the refractive index constant region by forming the refractive index modulation region through the utilization of the substantial gradient of the dispersion concentration of the ultrafine particle component. Further, the difference in refractive index between the light diffusing fine particle and the matrix (substantially the refractive index constant region) can be enlarged, and the refractive index gradient of the refractive index modulation region can be steepened by using the ultrafine particle component having largely different refractive index from those of the resin component and the light diffusing fine particles. As a result, an extremely thin light diffusing element which has strong light diffusibility and in which backscattering is suppressed can be obtained.

An average thickness L of the refractive index modulation region **30** is preferably 10 nm to 500 nm, more preferably 12 nm to 400 nm, still more preferably 15 nm to 300 nm. According to the light diffusing element obtained by the production method of the present invention, although the refractive index modulation region has an extremely small thickness, the difference in refractive index between the light diffusing fine particle and the matrix can be enlarged (a refractive index gradient can be steepened), and the refractive index can be continuously changed in the refractive index modulation region. The thickness of the refractive index modulation region **30** may be constant (that is, the refractive index modulation region may spread to the circumference of the light diffusing fine particle in a concentric circle shape), or the thickness may vary depending upon the position of the surface of the light diffusing fine particle (for example, the refractive index modulation region may have a contour shape of a candy called confetti). Preferably, the thickness of the refractive index modulation region **30** may vary depending upon the position of the surface of the light diffusing fine particle. With such construction, the refractive index can be changed more continuously in the refractive index modulation region **30**. The average thickness L is an average thickness in the case where the thickness of the refractive index modulation region **30** varies depending on positions on the surface of the light diffusing fine particle. When the thickness is constant, the average thickness is the thickness.

Preferably, in the refractive index modulation region **30,** the refractive index can change substantially continuously. More preferably, in addition to this, a refractive index in an outermost portion of the refractive index modulation region and a refractive index of the refractive index constant region are substantially identical. In other words, in the light diffusing element obtained by the production method of the present invention, the refractive index changes continuously from the refractive index modulation region to the refractive index constant region, and preferably, the refractive index changes continuously from the light diffusing fine particle to the refractive index constant region (FIG. **6**). More preferably, the change in refractive index is smooth as illustrated in FIG. **6.** That is, the refractive index changes in such a shape that a tangent can be drawn on a refractive index change curve in a boundary between the refractive index modulation region **30** and the refractive index constant region. Preferably, in the refractive index modulation region, the gradient of the change in refractive index increases with increasing distance from the light diffusing fine particle. According to the production method of the present invention, as described above, by appropriately selecting the light diffusing fine particles, and the resin component and the ultrafine particle component of the matrix, a substantially continuous change in refractive index can be realized. As a result, even when a refractive index difference between the matrix **10** (substantially, the refractive index constant region) and the light diffusing fine particles **20** is increased, reflection at an interface between the matrix **10** and each of the light diffusing fine particles **20** can be suppressed, and backscattering can be suppressed. Further, in the refractive index constant region, the weight concentration of the ultrafine particle component **12** the refractive index of which is largely different from that of each of the light diffusing fine particles **20** is relatively high, and hence, the refractive index difference between the matrix **10** (substantially, the refractive index constant region) and each of the light diffusing fine particles **20** can be increased. As a result, even a thin film can realize a large light diffusion half-value angle (strong light diffusibility). Thus, according to the light diffusing element obtained by the production method of the present invention, the refractive index difference can be increased to realize a high haze and backscattering can be suppressed remarkably. On the other hand, according to a light diffusing element using known GRIN fine particles, owing to a method of producing the GRIN fine particles called multi-stage polymerization, to enlarge the difference in refractive index between each of the fine particles and the matrix, and to steepen the refractive index change are both difficult. As a result, it is extremely difficult to achieve compatibility between a thin thickness and high diffusibility with the known GRIN fine particles. In addition, according to a conventional light diffusing element in which no refractive index modulation region is formed, when one attempts to impart strong light diffusibility (such as a large light diffusion half-value angle) by enlarging the difference in refractive index, a refractive index gap at the interface cannot be eliminated. As a result, backscattering due to reflection at the interface between each light diffusing fine particle and the matrix enlarges in many cases. According to the present invention, an extremely thin light diffusing element which has solved the problems of the related art, which has strong light diffusibility, and in which backscattering is suppressed can be obtained by forming, with light diffusing fine particles and ultrafine particle component whose zeta potentials have a predetermined relationship, a refractive index modulation region in the vicinity of an interface between a matrix and each of the light diffusing fine particles.

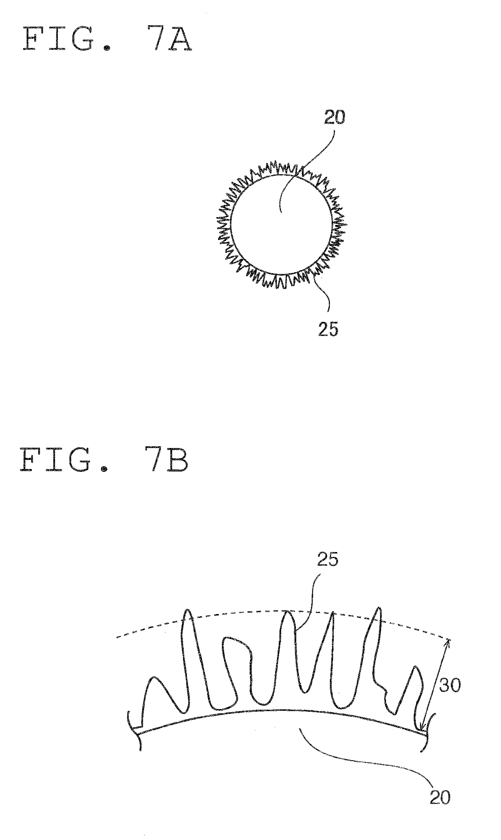

In one embodiment, two regions having different refractive indices form a fine uneven-shaped boundary in the vicinity of the interface between the matrix and each of the light diffusing fine particles. The size of the fine unevenness of the boundary is preferably equal to or less than the wavelength of light. That is, the formation of the fine uneven-shaped boundary of a size equal to or less than the wavelength of light between the two regions having different refractive indices results in the formation of a substantial refractive index modulation region in accordance with a height of the unevenness in the vicinity of the interface between the matrix and the light diffusing fine particle. FIG. **7A** and FIG. **7B** each illustrate a schematic view for illustrating the fine uneven-shaped boundary structure. As illustrated in FIG. **7A** and FIG. **7B,** a fine uneven-shaped boundary **25** is preferably such that the pitches of its unevenness, the depths of its recessed portions or the heights of its protruded portions, and the shapes of the recessed portions and the protruded portions are non-uniform. The formation of such non-uniform uneven structure in the vicinity of the interface between the matrix and the light diffusing fine particle can result in favorable formation of the refractive index modulation region. The average height of the unevenness in the fine uneven-shaped boundary is preferably 10 nm to 500 nm, more preferably 10 nm to 60 nm. The average pitch of the unevenness of the fine uneven-shaped boundary is preferably 100 nm or less, more preferably 50 nm or less, still more preferably 30 nm or less. A lower limit for the average pitch is preferably 5 nm, more preferably 10 nm. Such average pitch and average height enable the refractive index to change continuously over the entirety of the refractive index modulation region. As a result, an extremely thin light diffusing element which has strong light diffusibility and in which backscattering is suppressed can be obtained. Here, the term "average pitch" refers to the statistical average of horizontal distances between the apex and apex of protruded portions adjacent to each other in a predetermined range, and the term "average height" refers to the statistical average of the heights (vertical distances from bottoms to apexes) of the protruded portions in the predetermined range. Such fine uneven-shaped boundary as described above has, for example, a group of conical and/or needle-shaped fine protrusions protruding from the light diffusing fine particle toward the matrix as illustrated in FIG. **7B** (it should be noted that when viewed from the matrix side, the fine uneven-shaped boundary similarly has a group of conical and/or needle-shaped fine protrusions protruding toward the light diffusing fine particle). The formation of such fine uneven-shaped boundary can provide a light diffusing element having a low reflectance. Although the refractive index-modulating function of the refractive index modulation region can be expressed by virtue of the shape of the entirety of the fine uneven-shaped boundary, the dispersion concentration of the ultrafine particle component can form a substantial gradient in each protrusion of the group of protrusions at the boundary as well when viewed in an additionally microscopic manner.

In the light diffusing element according to this embodiment, it is preferred that the average refractive index $n_M$ of the matrix be larger than the refractive index $n_P$ of the light diffusing fine particle ($n_M > n_P$). As illustrated in FIG. **8(a)** and FIG. **8(b)** for comparison, in the case where $n_M > n_P$, as compared to the case where $n_M < n_P$, backscattering can be suppressed more satisfactorily even when the refractive index gradient of the refractive index modulation region is steep. $\Delta n$ (=$n_M$-$n_P$) is preferably 0.08 or more, more preferably 0.10 or more. The upper limit of $\Delta n$ is preferably 0.2.

The light diffusion property of the light diffusing element by the production method of the present embodiment is typically expressed by a haze and a light diffusion half-value angle. The haze indicates intensity of light diffusion, that is, a diffusion degree of incident light. On the other hand, the light diffusion half-value angle indicates quality of diffusion light, that is, an angle range of light to be diffused. The light diffusing element of the present embodiment exhibits its effects sufficiently when the haze is high. The haze of the light diffusing element is preferably 90% to 99.9%, more preferably 92% to 99.9%, still more preferably 95% to 99.9%, particularly preferably 97% to 99.9%. When the haze is 90% or more, the light diffusing element can be suitably used as a front light diffusing element in a collimated backlight front diffusing system. According to an embodiment of the present invention, a light diffusing element which has a very high haze and in which backscattering is suppressed as described above can be obtained. It should be noted that the collimated backlight front diffusing system refers to a system in which a front light diffusing element is provided on a viewer side of an upper polarizing plate, using collimated backlight (backlight with a narrow brightness half-width (e.g., 3° to 35° or ±1.5° to ±17.5°) condensed in a predetermined direction) in a liquid crystal display device. The haze can be determined in accordance with JIS 7136.

The light diffusion property of the light diffusing element is preferably 10° to 150° (5° to 75° on one side), more preferably 10° to 100° (5° to 50° on one side), still more preferably 30° to 80° (15° to 40° on one side) in terms of a light diffusion half-value angle. When the light diffusion half-value angle is too small, an oblique viewing angle (for example, white brightness) may become narrow in some cases. When the light diffusion half-value angle is too large, backscattering may become large in some cases.

The thickness of the light diffusing element can be set appropriately depending upon purposes and desired diffusion property. Specifically, the thickness of the light diffusing element is preferably 4 $\mu$m to 50 $\mu$m, more preferably 4 $\mu$m to 20 $\mu$m. According to an embodiment of the present invention, a light diffusing element having a very high haze (excellent light diffusibility) as described above in spite of such very small thickness can be obtained. Further, with such small thickness, the light diffusing element is not cracked even when it is bent, and can be stored in a roll shape.

B. Polarizing plate with light diffusing element

B-1. Entire construction of polarizing plate with light diffusing element

A polarizing plate with a light diffusing element of the present invention is obtained by the method described in the sections A-1 to A-5 and the section B above. Typically, the polarizing plate with a light diffusing element is placed on a viewer side of a liquid crystal display device. FIG. 9 is a schematic cross-sectional view of a polarizing plate with a light diffusing element according to a preferred embodiment of the present invention. A polarizing plate with a light diffusing element **200** in the figure includes a light diffusing element **100** and a polarizer **110.** The light diffusing element **100** is the light diffusing element of the present invention described in the section C. The light diffusing element **100** is disposed so as to be placed at a position closest to a viewer side when the polarizing plate with a light diffusing element is placed on the viewer side of the liquid crystal display device. In one embodiment, a low reflective layer or a reflection preventing treatment layer (anti-reflection treatment layer) is placed on the viewer side of the light diffusing element **100** (not shown). In the example illustrated in the figure, the polarizing plate with a light diffusing element **200** includes protective layers **120** and **130** on both sides of the polarizer. The light diffusing element, the polarizer and the protective layers are attached to each other via any suitable adhesive layer or pressure-sensitive adhesive layer. At least one of the protective layers **120** and **130** may be omitted depending upon the purpose, the construction of the polarizing plate, and the construction of the liquid crystal display device. For example, in the case where a base material used for forming the light diffusing element can function as a protective layer, the protective layer **120** may be omitted. The polarizing plate with a light diffusing element of the present invention can be used particularly suitably as a viewer side polarizing plate in a liquid crystal display device adopting a collimated backlight front diffusing system. It should be noted that: regarding the polarizer and the protective layer, any appropriate constitution in the art can be adopted, and hence, detailed explanation are not described herein.

Examples

Hereinafter, the present invention is specifically described by way of examples. However, the present invention is not limited by these examples. Evaluation methods in the examples are as follows. In addition, unless otherwise stated, "part(s)" and "%" in the examples are by weight.

(1) Thickness of light diffusing element

The total thickness of a base material and a light diffusing element was measured with a microgauge-type thickness meter (manufactured by Mitutoyo Corporation), and the thickness of the base material was subtracted from the total thickness to calculate the thickness of the light diffusing element.

(2) Haze

Measurement was performed with a haze meter ("HN-150" (trade name) manufactured by Murakami Color Research Laboratory Co., Ltd.) in accordance with a method specified in JIS 7136.

(3) Backscattering ratio

The laminate of the light diffusing element and the base material obtained in each of the examples and comparative examples was attached onto a black acrylic plate ("SUMIPEX" (trade name) (trademark), thickness: 2 mm, manufactured by Sumitomo Chemical Co., Ltd.) via a transparent pressure-sensitive adhesive to obtain a measurement sample. The integrated reflectance of the measurement sample was measured with a spectrophotometer ("U4100" (trade name) manufactured by Hitachi Ltd.). On the other hand, a laminate of a base material and a transparent applied layer was produced as a control sample, using an application liquid in which fine particles were removed from an application liquid for the light diffusing element and the integrated reflectance (i.e., surface reflectance) thereof was measured in the same way as described above. The integrated reflectance (surface reflectance) of the control sample was subtracted from the integrated reflectance of the measurement sample to calculate a backscattering ratio of the light diffusing element.

(4) Recognition of refractive index modulation region

A laminate of the light diffusing element and the base material obtained in each of the examples and comparative examples was sliced so as to have a thickness of 0.1 $\mu$m with a microtome while being cooled with liquid nitrogen to obtain a measurement sample. The state of fine particles in a light diffusing element portion of the measurement sample and the state of an interface between the fine particles and the matrix were observed with a transmission electron microscope (TEM). A portion in which the interface between the fine particles and the matrix was unclear was defined as "refractive indexmodulation region". In the case where an interface between the fine particle and the matrix was clear, it was recognized that no refractive index modulation region was formed.

(5) Light diffusion half-value angle

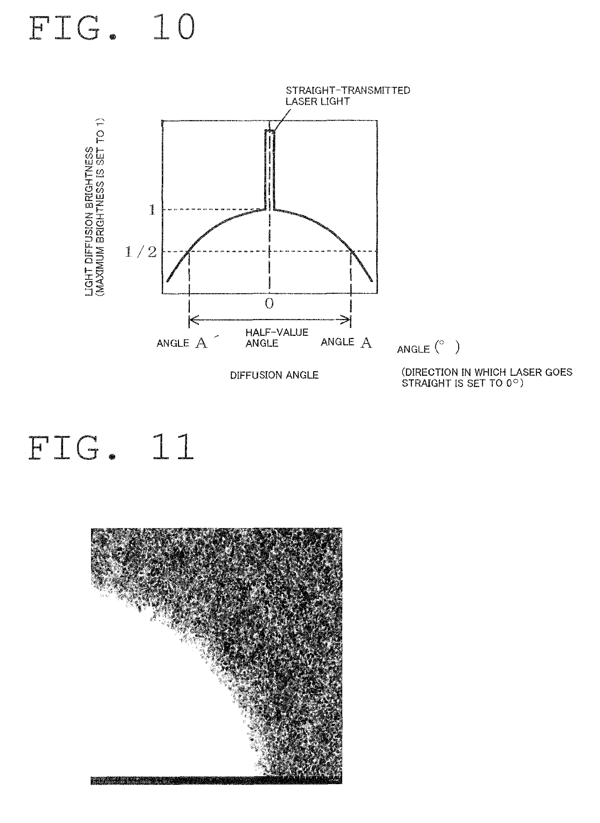

The light diffusing element was irradiated with laser light from its front surface. The diffusion brightness of diffused light at a diffusion angle was measured every 1° by a goniophotometer. As shown in FIG. **10,** diffusion angles corresponding to a half of a maximum value of diffusion brightness of light beams other than a straight-transmitted laser beam were measured on both sides of a diffusion profile. A value obtained by adding the angles measured on both sides ("(angle A) + (angle A')" in FIG. **10**) was defined as a light diffusion half-value angle.

(6) Measurement of zeta potential

The electrophoretic mobilities of a measurement sample obtained by dispersing light diffusing fine particles or ultrafine particle component in a pentaerythritol triacrylate/MIBK solution, and of the application liquids of an example and a comparative example were measured with an electrophoretic apparatus (manufactured by Malvern Instruments), and then their zeta potentials z were determined from the following expression (1). It should be noted that the electrophoretic mobilities were each obtained through the measurement of the moving velocity of a particle in electrophoresis by a laser Doppler velocity measurement method.

$$z = (U_E \times 3\eta) / (f(ka) \times 2\varepsilon) \quad \cdots \quad (1)$$

In the expression (1), $U_E$ represents an electrophoretic mobility, $\eta$ represents the viscosity of a medium, $\varepsilon$ represents the dielectric constant of the medium, and $f(ka)$ represents a Henry function.

<Example 1: Production of light diffusing element>

To 100 parts of a hard coat resin ("Opstar KZ6661" (trade name) (containing MEK/MIBK), manufactured by JSR Corporation) containing 62% of zirconia nano particles (average primary particle diameter: 10 nm, average particle diameter: 60 nm, refractive index: 2.19) as an ultrafine particle component, 11 parts of a 50% methyl ethyl ketone (MEK) solution of pentaerythritol triacrylate ("Biscoat # 300" (trade name), refractive index: 1.52, manufactured by Osaka Organic Chemical Industry Ltd.) as a monomer of a resin component, 0.5 part of a photopolymerization initiator ("Irgacure 907" (trade name), manufactured by BASF Japan Ltd.), 0.5 part of a leveling agent ("GRANDIC PC 4100" (trade name), manufactured by DIC Corporation), and 15 parts of polymethyl methacrylate (PMMA) fine particles ("SAX-102" (trade name), average particle diameter: 2.5 $\mu$m, refractiveindex:1.495,manufactured bySekisuiPlasticsCo., Ltd.) as light diffusing fine particles were added. The mixture was subj ected to dispersion treatment by stirring with a stirring machine ("DESPA" (trade name), manufactured by ASADA IRON WORKS. CO., LTD.) for 30 minutes to prepare an application liquid in which the above-mentioned respective components were macroscopically dispersed uniformly. The solid content of the application liquid was 55%. The zeta potential of each of the zirconia nanoparticles in the pentaerythritol triacrylate/ MIBK solution was +32.3 mV, and the zeta potential of each of the PMMA fine particles therein was +1.1 mV. Further, the zeta potential of each of the PMMA fine particles in the application liquid immediately after its preparation (1 hour after the preparation) was +14.4 mV, and the zeta potential of each of the PMMA fine particles after the application liquid had been left at rest at room temperature (25°C) for 24 hours was +7.5 mV (52% of that immediately after the preparation), i.e., the reduction degree of the zeta potential was 6.9 mV. The fact that the zeta potential reduced suggests that in the application liquid, a concentration modulation region in which the presence ratio of the ultrafine particle component increases as a distance from a light diffusing fine particle lengthens is microscopically formed in the vicinity of the surface of the light diffusing fine particle.

After the application liquid was stirred with a stirring machine, the application liquid was applied onto a base material made of a TAC film ("FUJITAC" (trade name), thickness: 40 $\mu$m, manufactured by Fuji Photo Film Co., Ltd.) with a bar coater, dried at 100°C for 1 minute, and irradiated with UV light with an integrated light quantity of 300 mJ/cm$^2$ to obtain a light diffusing element with a thickness of 11 $\mu$m. The obtained light diffusing element was subjected to the above-mentioned evaluations (1) to (6). Further, FIG. 11 shows a TEM photograph of the vicinity of one of the light diffusing fine particles. As is apparent from FIG. **11,** in the light diffusing element, a refractive index modulation region was formed in the vicinity of an interface between the matrix and the light diffusingfineparticle. It should be noted that a difference between the average refractive index $n_M$ of the matrix and the refractive index $n_P$ of each of the light diffusing fine particles in the resultant light diffusing element was 0.12 ($n_M > n_P$). In addition, as a result of the calculation of a relationship between a distance from the surface of the light diffusing fine particle and the dispersion concentration (presence ratio) of the ultrafine particle component from the TEM image, it was confirmed that the gradient of the dispersion concentration of the ultrafine particle component enlarged as the distance from the light diffusing fine particle lengthened.

<Comparative Example 1>

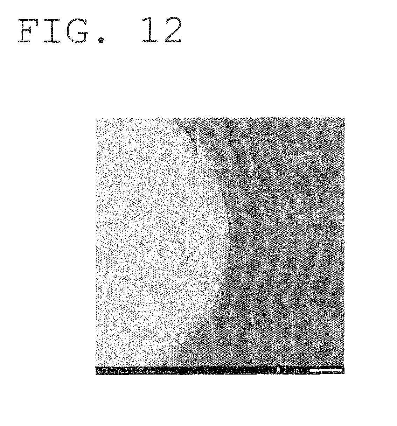

A light diffusing element having a thickness of 11 $\mu$m was obtained in the same manner as in Example 1 except that the light diffusing fine particles were changed to silicone resin fine particles ("TOSPEARL 120" (trade name), average particle diameter: 2.0 $\mu$m, refractive index: 1.43, manufactured by Momentive Performance Materials Inc.). It should be noted that the zeta potential of each of the silicone resin fine particles in the pentaerythritol triacrylate/MIBK solution was -31 mV. Further, the zeta potential of each of the silicone resin fine particles in the application liquid immediately after its preparation (1 hour after the preparation) was +18.5 mV, and the zeta potential of each of the silicone resin fine particles after the application liquid had been left at rest at room temperature (25°C) for 24 hours was +17. 6 mV (90% of that immediately after the preparation), i.e., the reduction degree of the zeta potential was 0.9 mV.
The obtained light diffusing element was subjected to the evaluations (1) to (6). Table 1 shows the results. Further, FIG. **12** shows a TEM photograph of the vicinity of one of the light diffusing fine particles. As is apparent from FIG. **12,** in the light diffusing element, an interface between the matrix and the light diffusing fine particle was clear, and hence no refractive index modulation region was formed.
[Table 1]

|  | Example 1 | Comparative Example 1 |
|---|---|---|
| Zeta potential of ultrafine particle component in monomer solution (mV) | +32.3 | +32.3 |
| Zeta potential of each of light diffusing fine particles in monomer solution (mV) | +1.1 | -31 |
| (Zeta potential of each of light diffusing fine particles after 24 hours of still standing of application liquid/zeta potential of each of light diffusing fine particles immediately after preparation of application liquid) ×100 (%) | 52 | 90 |
| Reduction degree of zeta potential of each of light diffusing fine particles after 24 hours of still standing of application liquid (mV) | 6.9 | 0.9 |
| Refractive index modulation region | Present | Absent |
| Thickness ($\mu$m) | 11 | 11 |
| Light diffusion half-value angle (°) | 60 | 44 |
| Haze (%) | 98.60 | 98.30 |
| Backscattering ratio (%) | 0.39 | 0.51 |

<Example 2: Application to liquid crystal display device>

A liquid crystal cell was removed from a commercially available liquid crystal TV ("KDL20J3000" (trade name), BRAVIA (20-inch), manufactured by Sony Corporation) having a liquid crystal cell of a multi-domain type VA mode. Commercially available polarizing plates ("NPF-SEG1423DU" (trade name), manufactured by Nitto Denko Corporation) were attached to both sides of the liquid crystal cell so that absorption axes of the respective polarizers were perpendicular to each other. More specifically, the polarizing plates were attached to the liquid crystal cell so that the absorption axis direction of the polarizer of the backlight side polarizing plate became a vertical direction (90° with respect to the longitudinal direction of the liquid crystal panel) and the absorption axis direction of the polarizer of the viewer side polarizing plate became a horizontal direction (0° with respect to the longitudinal direction of the liquid crystal panel). Further, the light diffusing element of Example 1 was transferred from the base material to be attached to the outer side of the viewer side polarizing plate to produce a liquid crystal panel.

Meanwhile, a pattern of a lenticular lens was transferred to one surface of a PMMA sheet by melt thermal transfer, using a transfer roll. Aluminum was pattern deposited to a surface (smooth surface) on a side opposite to the surface on which the lens pattern was formed so that light passed through only a focal point of the lens, and thus, a reflective layer having an area ratio of an opening of 7% (area ratio of a reflection portion of 93%) was formed. Thus, a light collecting element was produced. As a light source of a backlight, a cold cathode fluorescent lamp (CCFL of BRAVIA20J, manufactured by Sony Corporation) was used, and the light collecting element was attached to the light source to produce a collimated light source device (backlight unit) emitting collimated light.

The above-mentioned backlight unit was incorporated into the above-mentioned liquid crystal panel to produce a liquid crystal display device of a collimated backlight front diffusing system. A white display and a black display were performed in a dark place in the obtained liquid crystal display device, and the display states were visually observed. As a result, the liquid crystal display device exhibited satisfactory display characteristics in which a black display was dark in a bright place, and brightness of a white display in a dark place was high, when seen from an oblique direction.

<Comparative Example 2>

A liquid crystal display device was produced in the same manner as in Example 2 except for using the light diffusing element of Comparative Example 1. A white display and a black display were performed in a dark place in the obtained liquid crystal display device, and the display states were visually observed. As a result, although brightness of a white display in a dark place was high, a black display in a bright place looked whitish when seen from an oblique direction.

<Evaluation>

The refractive index modulation region was formed in the light diffusing element of Example 1 obtained from the application liquid in which the zeta potential of the ultrafine particle component and the zeta potential of each of the light diffusing fine particles in the monomer solution were equal in sign to each other. On the other hand, no refractive index modulation region was formed in the light diffusing element of Comparative Example 1 obtained from the application liquid in which the zeta potential of the ultrafine particle component and the zeta potential of each of the light diffusing fine particles in the monomer solution were different in sign from each other. As a result, the light diffusing element of Example 1 was superior in all of a light diffusion half-value angle, a haze, and a backscattering ratio to the light diffusing element of Comparative Example 1. The light diffusing element of Example 1 exhibited exceptional display characteristics when used as a front diffusing element of a liquid crystal display device of a collimated backlight front diffusing system. On the other hand, the light diffusing element of Comparative Example 1 was recognized to have a problem in that a black display became whitish in a bright place when used as a front diffusing element of a liquid crystal display device of a collimated backlight front diffusing system.

Industrial Applicability

The light diffusing element and the polarizing plate with a light diffusing element each obtained by the production method of the present invention can each be used suitably in a viewer side member of a liquid crystal display device, a member for a backlight of a liquid crystal display device, and a diffusing member for illumination equipment (for example, an organic EL, LED).

Reference Signs List

| 10 | matrix |
| 11 | resin component |
| 12 | ultrafine particle component |
| 20 | light diffusing fine particle |
| 30 | refractive index modulation region |

(continued)

| 100 | light diffusing element |
| 110 | polarizer |
| 120 | protective layer |
| 130 | protective layer |
| 200 | polarizing plate with light diffusing element |

**Claims**

1. A method of producing a light diffusing element, comprising the steps of:

    mixing a matrix formation material containing a monomer of a resin component and an ultrafine particle component, light diffusing fine particles, and a solvent for dissolving the monomer; and
    polymerizing the monomer,
    wherein a zeta potential of each of the light diffusing fine particles in a solution prepared by dissolving the monomer in the solvent is equal in sign to a zeta potential of the ultrafine particle component in the solution prepared by dissolving the monomer in the solvent.

2. A method of producing a light diffusing element according to claim 1, further comprising the step of reducing a zeta potential of each of the light diffusing fine particles in a mixed liquid prepared in the mixing step to 60% or less of a zeta potential of each of the light diffusing fine particles in the mixed liquid immediately after the preparation in the mixing step.

3. A method of producing a light diffusing element according to claim 1, further comprising the step of reducing a zeta potential of each of the light diffusing fine particles in a mixed liquid prepared in the mixing step by 6 mV or more from a zeta potential of each of the light diffusing fine particles in the mixed liquid immediately after the preparation in the mixing step.

4. A method of producing a light diffusing element according to claim 2 or 3, wherein the step of reducing the zeta potential comprises at least one selected from the group consisting of leaving the mixed liquid at rest at room temperature for 10 hours or more, subj ecting the mixed liquid to a treatment selected from an ultrasonic treatment and a dispersion treatment with a stirring machine, and subjecting the mixed liquid to a heating treatment.

5. A method of producing a light diffusing element according to any one of claims 2 to 4, further comprising the step of uniformizing a concentration of the light diffusing fine particles in the mixed liquid after the step of reducing the zeta potential.

6. A method of producing a light diffusing element according to any one of claims 1 to 5, wherein the ultrafine particle component has an average primary particle diameter of 1 nm to 100 nm.

7. A method of producing a light diffusing element according to any one of claims 1 to 6, comprising the steps of:

    preparing an application liquid containing the matrix formation material and the light diffusing fine particles;
    applying the application liquid onto a long base material while conveying the base material; and
    polymerizing the monomer of the resin component in the application liquid while conveying the base material to which the application liquid is applied.

8. A method of producing a light diffusing element according to any one of claims 1 to 7, further comprising, after the mixing step and before the polymerizing step, the step of forming, in a vicinity of a surface of each of the light diffusing fine particles in the mixed liquid prepared in the mixing step, a concentration modulation region in which a presence ratio of the ultrafine particle component increases as a distance from the light diffusing fine particle lengthens.

9. A method of producing a polarizing plate with a light diffusing element, comprising attaching a light diffusing element obtained by the production method according to any one of claims 1 to 8 and a polarizing plate.

10. A light diffusing element, which is obtained by the production method according to any one of claims 1 to 8, the element comprising:

> a matrix; and
> light diffusing fine particles dispersed in the matrix,
> wherein a refractive index modulation region in which a refractive index changes substantially continuously is formed in a vicinity of an interface between the matrix and each of the light diffusing fine particles.

11. A polarizing plate with a light diffusing element, which is obtained by the production method according to claim 9.

12. A mixed liquid for forming a light diffusing element, comprising:

> a matrix formation material containing a monomer of a resin component and an ultrafine particle component;
> light diffusing fine particles; and
> a solvent for dissolving the monomer,
> wherein the mixed liquid for forming a light diffusing element has, in a vicinity of a surface of each of the light diffusing fine particles, a concentration modulation region in which a presence ratio of the ultrafine particle component increases as a distance from the light diffusing fine particle lengthens.

13. A method of producing a mixed liquid for forming a light diffusing element according to claim 12, the method comprising the steps of:

> mixing a matrix formation material containing a monomer of a resin component and an ultrafine particle component, light diffusing fine particles, and a solvent for dissolving the monomer; and
> forming, in an outer portion of a vicinity of a surface of each of the light diffusing fine particles in a mixed liquid prepared in the mixing step, a concentration modulation region in which a presence ratio of the ultrafine particle component increases as a distance from the light diffusing fine particle lengthens.

14. A method of producing a mixed liquid for forming a light diffusing element according to claim 13, wherein a zeta potential of each of the light diffusing fine particles in a solution prepared by dissolving the monomer in the solvent is equal in sign to a zeta potential of the ultrafine particle component in the solution prepared by dissolving the monomer in the solvent.

15. A method of producing a mixed liquid for forming a light diffusing element according to claim 13 or 14, wherein the step of forming the concentration modulation region comprises reducing a zeta potential of each of the light diffusing fine particles in a mixed liquid prepared in the mixing step to 60% or less of a zeta potential of each of the light diffusing fine particles in the mixed liquid immediately after the preparation in the mixing step.

16. A method of producing a mixed liquid for forming a light diffusing element according to claim 13 or 14, wherein the step of forming the concentration modulation region comprises reducing a zeta potential of each of the light diffusing fine particles in a mixed liquid prepared in the mixing step by 6 mV or more from a zeta potential of each of the light diffusing fine particles in the mixed liquid immediately after the preparation in the mixing step.

17. A method of producing a mixed liquid for forming a light diffusing element according to any one of claims 13 to 16, wherein the step of forming the concentration modulation region comprises at least one selected from the group consisting of leaving the mixed liquid at rest at room temperature for 10 hours or more, subjecting the mixed liquid to an ultrasonic treatment, and subjecting the mixed liquid to a heating treatment.

18. A method of producing a mixed liquid for forming a light diffusing element according to any one of claims 13 to 17, further comprising the step of uniformizing a concentration of the light diffusing fine particles in the mixed liquid after the step of forming the concentration modulation region.

19. A method of producing a mixed liquid for forming a light diffusing element according to any one of claims 13 to 18, wherein the ultrafine particle component has an average primary particle diameter of 1 nm to 100 nm.

EP 2 618 185 A1

ULTRAFINE PARTICLE COMPONENT

SOLUTION PREPARED BY DISSOLVING MONOMER IN SOLVENT

F4

F3

F2

F1

LIGHT DIFFUSING FINE PARTICLE

LIGHT DIFFUSING FINE PARTICLE

BEFORE REDUCTION OF ZETA POTENTIAL OF LIGHT DIFFUSING FINE PARTICLE

AFTER REDUCTION TO 60% OR LESS OF ZETA POTENTIAL OF LIGHT DIFFUSING FINE PARTICLE

REPULSIVE FORCE ACTING ON ULTRAFINE PARTICLE COMPONENT :

F1>F2>F3>F4

REFRACTIVE INDEX MODULATION REGION :

REGION IN WHICH PRESENCE RATIO OF ULTRAFINE PARTICLE COMPONENT INCREASES AS DISTANCE FROM LIGHT DIFFUSING FINE PARTICLE LENGTHENS

FIG. 1B

# FIG. 2

# FIG. 3A

100

20    30

12 11

10

# FIG. 3B

MATRIX

REFRACTIVE INDEX
CONSTANT REGION

REFRACTIVE INDEX
MODURATION REGION

LIGHT DIFFUSING
FINE PARTICLE

ULTRAFINE PARTICLE
COMPONENT

FIG. 4A

# FIG. 4B

FIG. 4C

FIG. 4D

# FIG. 5

# FIG. 6

FIG. 7A

FIG. 7B

# FIG. 8

(a)

$n_M > n_P$

NOT TO BE
BACKSCATTERING

$n_M$

$n_P$

(b)

$n_M < n_P$

$n_M$

$n_P$

TO BE
BACKSCATTERING

# FIG. 9

200

100
120
110
130

# FIG. 10

STRAIGHT-TRANSMITTED
LASER LIGHT

LIGHT DIFFUSION BRIGHTNESS
(MAXIMUM BRIGHTNESS IS SET TO 1)

1

1/2

0

ANGLE A

HALF-VALUE
ANGLE

ANGLE A

ANGLE (° )

DIFFUSION ANGLE

(DIRECTION IN WHICH LASER GOES
STRAIGHT IS SET TO 0°)

# FIG. 11

FIG. 12

**INTERNATIONAL SEARCH REPORT**

| International application No. |
| --- |
| PCT/JP2011/071232 |

A. CLASSIFICATION OF SUBJECT MATTER
*G02B5/02*(2006.01)i, *F21V3/04*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/02, F21V3/04, G02F1/1335

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2009-244383 A (Fujifilm Corp.), | 1,6,8-14, |
|   | 22 October 2009 (22.10.2009), | 18-19 |
| Y | paragraphs [0044], [0082] to [0086], [0093] to | 7 |
| A | [0094], [0104] to [0105]; fig. 2, 3 | 2-5,15-17 |
|   | (Family: none) | |
|   | | |
| X | JP 2009-070814 A (Fujifilm Corp.), | 1,6,8,10, |
|   | 02 April 2009 (02.04.2009), | 12-14,17-19 |
| Y | paragraphs [0097] to [0098], [0129] | 7 |
| A | & US 2009/0051278 A1 & KR 10-2009-0019753 A | 2-5,9,11, |
|   | | 15-16 |
|   | | |
| Y | JP 2009-276089 A (Canon Inc.), | 1,6-14,17-19 |
|   | 26 November 2009 (26.11.2009), | |
|   | paragraph [0046] | |
|   | (Family: none) | |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 October, 2011 (21.10.11) | 01 November, 2011 (01.11.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/071232

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2009-533863 A  (LG Chem, Ltd.),<br>17 September 2009 (17.09.2009),<br>paragraph [0030]<br>& US 2007/0243710 A1    & EP 2007550 A<br>& WO 2007/119965 A1    & KR 10-2007-0102222 A<br>& CN 101415525 A | 1,6-14,17-19 |
| Y | JP 2005-309399 A  (Fuji Photo Film Co., Ltd.),<br>04 November 2005 (04.11.2005),<br>paragraph [0192]<br>(Family: none) | 7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3071538 B
- JP 6347617 A
- JP 2003262710 A
- JP 2002212245 A
- JP 2002214408 A
- JP 2002328207 A
- JP 2010077243 A
- JP 2010107616 A